# NEUE EUROPÄISCHE PATENTSCHRIFT

(11) **EP 1 508 819 B2**
(45) Veröffentlichungstag und Bekanntmachung des Hinweises auf die Entscheidung über den Einspruch: **29.10.2014**
(45) Hinweis auf die Patenterteilung: 23.01.2008
(21) Anmeldenummer: 04015288.6
(22) Anmeldetag: 30.06.2004
(51) Int. Cl.: G01S 13/93, G08G 1/16, B60K 31/00, B60T 7/22, B62D 15/02, B60W 30/10, B60W 10/20, B60W 10/18, B60T 8/1755

(54) **Fahrassistenzsystem für ein Kraftfahrzeug**
Driving assist system for a vehicle
Système d'assistance à la conduite pour un véhicule

(30) Priorität: 19.08.2003 DE 10337991
(43) Veröffentlichungstag der Anmeldung: 23.02.2005
(73) Patentinhaber: Volkswagen Aktiengesellschaft, 38440 Wolfsburg (DE)
(72) Erfinder: Spichalsky, Carsten, 38165 Lehre (DE); Wilhelm, Werner, 38350 Helmstedt/Barmke (DE); Beil, Falk, Dr., 38110 Braunschweig (DE); Bartels, Arne, Dr., 38448 Wolfsburg (DE); Meinecke, Marc-Michael, Dr., 38524 Sassenburg (DE); Lienkamp, Markus, Dr., 37108 Braunschweig (DE)
(74) Vertreter: Kiriczi, Sven Bernhard

(56) Entgegenhaltungen:
- EP-B1- 0 871 898
- DE-A1- 10 030 258
- DE-A1- 10 036 276
- DE-A1- 10 109 052
- DE-A1- 10 161 567
- DE-A1- 19 928 679
- DE-A1- 19 931 014
- US-A- 5 540 298
- US-A- 6 138 062
- US-A1- 2002 107 637

## Beschreibung

Die US 2002/0107637 A1 offenbart ein System und ein Verfahren zur Überwachung der Umgebung eines Fahrzeugs. Dabei weist das System zur Überwachung der Umgebung des Fahrzeugs einen Laserscanner, einen Geschwindigkeitssensor und einen Gierratensensor auf. Die Ausgangssignale werden in eine Schaltung verknüpft, die eine externe Einrichtung zur Ausgabe einer Warnmeldung ansteuert.

Die US 5 540 298 offenbart ein System zum Generieren eines automatischen Lenk- und Bremseingriffs Weitere Fahrassistenzsystem sind aus der DE 100 30 258 A1 und der US 6 138 062 bekannt.

Es ist Aufgabe der Erfindung insbesondere die Sicherheit auf Autobahnen im Baustellenbereich zu verbessern.

Diese Aufgabe wird durch ein Fahrassistenzsystem für ein auf einer Fahrspur fahrbares Kraftfahrzeug gemäß Anspruch 1 gelöst.

In vorteilhafter Ausgestaltung der Erfindung ist die Fahrassistenzsteuerung (71) zur Bestimmung des Lenkwinkelkorrekturwertes, zur Bestimmung des Bremskorrekturwertes und/oder zur Ausgabe einer Abstandswaminformation in Abhängigkeit des Abstandes (dHL, dHR) zwischen dem Kraftfahrzeug (1) und dem im wesentlichen neben der Fahrspur (4) liegenden Hindernis (2, 8) und/oder der Geschwindigkeit (vH) des Hindernisses (2) ausgestaltet.

In weiterhin vorteilhafter Ausgestaltung der Erfindung sind der Radarsensor und/oder der Lasersensor zur Bestimmung eines Abstandes von weniger als 10 m, insbesondere 5 m, zwischen dem Kraftfahrzeug und einem im wesentlichen neben der Fahrspur oder vor dem Kraftfahrzeug liegenden Hindernis ausgebildet. In weiterhin vorteilhafter Ausgestaltung der Erfindung sind der Radarsensor und/oder der Lasersensor zur Bestimmung eines Abstandes von weniger als 1 m zwischen dem Kraftfahrzeug und einem im wesentlichen neben der Fahrspur oder vor dem Kraftfahrzeug liegenden Hindernis ausgebildet.

In weiterhin vorteilhafter Ausgestaltung der Erfindung besitzt der Radarsensor eine Grundfrequenz von in etwa 24 GHz.

In weiterhin vorteilhafter Ausgestaltung der Erfindung weist das Fahrassistenzsystem eine Kamera zum Aufnehmen eines Bildes der Fahrspur und insbesondere zur Ausgabe eines Videosignals auf.

In weiterhin vorteilhafter Ausgestaltung der Erfindung ist die Fahrassistenzsteuerung zur Bestimmung des Lenkwinkelkorrekturwertes, des Bremskorrekturwertes und/oder der Abstandswarninformation in Abhängigkeit des von der Kamera aufgenommenen Bildes der Fahrspur ausgebildet.

In weiterhin vorteilhafter Ausgestaltung der Erfindung weist das Fahrassistenzsystem eine Einrichtung zur automatischen Einstellung der Lenkung in Abhängigkeit des Lenkwinkelkorrekturwertes auf.

In weiterhin vorteilhafter Ausgestaltung der Erfindung weist das Fahrassistenzsystem eine Einrichtung zur optischen Darstellung und/oder akustischen und/oder haptischen Wiedergabe der Abstandswarninformation auf.

In weiterhin vorteilhafter Ausgestaltung der Erfindung ist der Radarsensor und/oder der Lasersensor an einem Seitenspiegel des Kraftfahrzeuges und/oder an einem Stoßfänger des Kraftfahrzeuges angeordnet.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:
- Fig. 1: eine Draufsicht auf ein Kraftfahrzeug in einem Baustellenabschnitt einer Autobahn,
- Fig. 2: eine Draufsicht auf ein Kraftfahrzeug in einem alternativen Baustellenabschnitt einer Autobahn,
- Fig. 3: eine Draufsicht auf ein Kraftfahrzeug,
- Fig. 4: eine Vorderansicht eines Kraftfahrzeuges,
- Fig. 5: eine Seitenansicht eines Kraftfahrzeuges,
- Fig. 6: ein Fahrassistenzsystem für ein Kraftfahrzeug und
- Fig. 7: eine Fahrassistenzsteuerung.

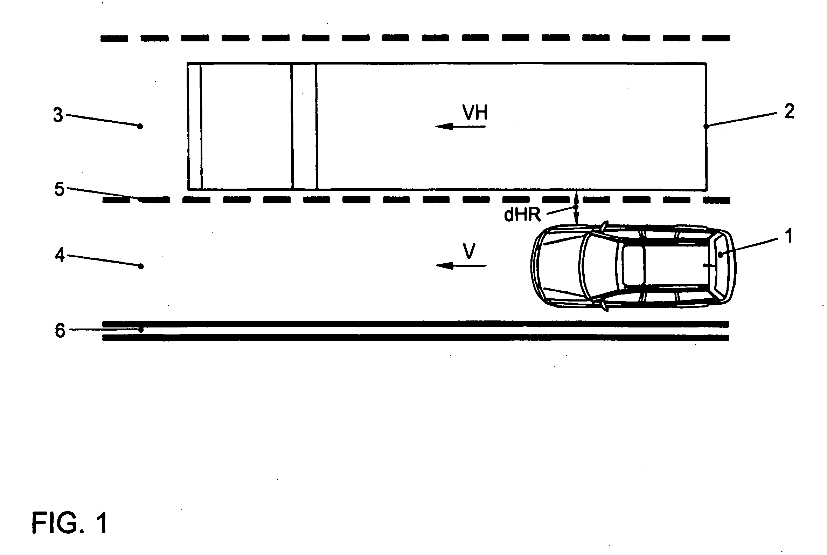

Fig. 1 zeigt eine Draufsicht auf ein Kraftfahrzeug 1 in einem Baustellenabschnitt einer Autobahn mit einer rechten Behelfsfahrspur 3 und einer linken Behelfsfahrspur 4, wobei die rechte Behelfsfahrspur 3 von der linken Behelfsfahrspur 4 durch eine Fahrbahnmarkierung 5 getrennt ist. Von einer Behelfsfahrspur mit Gegenverkehr trennt die linke Behelfsfahrspur 4 ein Fahrbahnmarkierung 6. Auf der rechten Behelfsfahrspur 3 befindet sich neben dem Kraftfahrzeug 1 ein Lastkraftwagen 2.

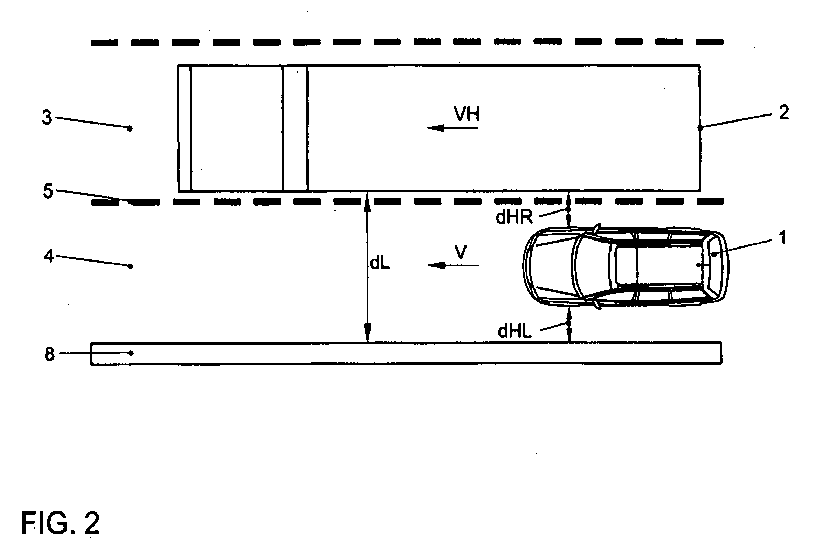

Fig. 2 zeigt eine Draufsicht auf das Kraftfahrzeug 1 und den Lastkraftwagen 2 in einem alternativen Baustellenabschnitt einer Autobahn. Dabei bezeichnen Bezugszeichen 3 ebenfalls eine rechte Behelfsfahrspur, Bezugszeichen 4 ebenfalls eine linke Behelfsfahrspur und Bezugszeichen 5 ebenfalls eine Fahrbahnmarkierung zwischen der rechten Behelfsfahrspur 3 und der linken Behelfsfahrspur 4. Gemäß dem in Fig. 2 gezeigten Baustellenabschnitt trennt eine in etwa einen halben Meter hohe Mauer 8 aus Betonelementen die linke Behelfsfahrspur 4 von einer Behelfsfahrspur mit Gegenverkehr.

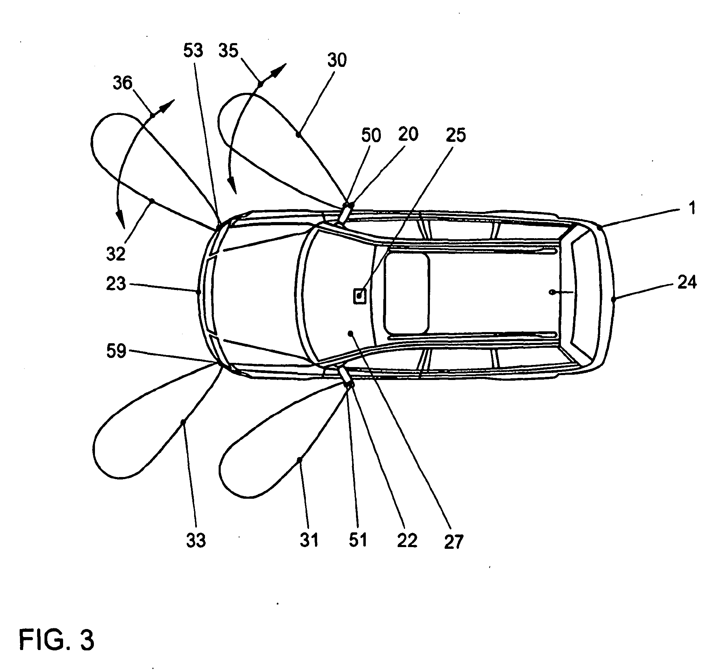

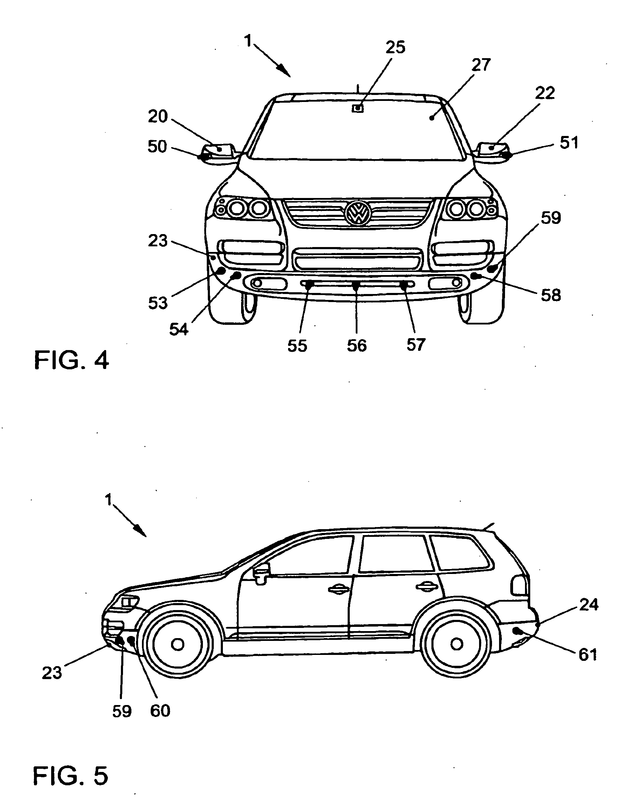

In den in Fig. 1 und Fig. 2 gezeigten Situationen besteht ein erhöhtes Risiko für das Kraftfahrzeug 1 auf der linken Behelfsfahrspur 4. Um dieses Risiko zu vermindern weist das Kraftfahrzeug 1 ein mit Bezugnahme auf Fig. 3, Fig. 4, Fig. 5, Fig. 6 und Fig. 7 erläutertes Fahrassistenzsystem auf. Dabei zeigt Fig. 3 eine Draufsicht auf das Kraftfahrzeug 1, Fig. 4 eine Vorderansicht des Kraftfahrzeuges 1 und Fig. 5 eine Seitenansicht des Kraftfahrzeuges 1.

Das Kraftfahrzeug 1 weist Seitenspiegel 20 und 22 auf, an denen Radarsensoren 50 und 51 z.B. zur Bestimmung eines Abstandes zwischen dem Kraftfahrzeug 1 und einem neben der linken Behelfsfahrspur 4 liegenden Hindernis, wie dem Lastkraftwagen 2 oder der Mauer 8, angeordnet sind. Zudem weist das Kraftfahrzeug 1 Stoßfänger 23 und 24 auf, wobei an dem Stoßfänger 23 ebenfalls Radarsensoren 53 und 59 z.B. zur Bestimmung eines Abstandes zwischen dem Kraftfahrzeug 1 und einem neben der linken Behelfsfahrspur 4 liegenden Hindernis, wie dem Lastkraftwagen 2 oder der Mauer 8, angeordnet sind. Die Radarsensoren 53 und 59 an dem Stoßfänger 23 können auch durch einen Sensor in der Mitte des Stoßfängers 23 ergänzt oder ersetzt werden.

Die Radarsensoren 50, 51, 53 und 59 sind jeweils nach schräg vorne gerichtet, wie dies durch die Keulen 30, 31, 32 und 33 angedeutet ist. Es kann vorgesehen sein, dass die Keulen 30, 31, 32 und 33 - wie durch die Doppelpfeile 35 und 36 angedeutet - elektronisch schwenkbar sind. Es können auch weitere Radarsensoren 60 und 61 seitlich an den Stoßfängern 23 und 24 vorgesehen sein, die im wesentlichen in Querrichtung ausgerichtet sind. Dies kann auch für die Radarsensoren 50 und 51 vorgesehen werden.

Das Kraftfahrzeug 1 weist zudem eine hinter einer Frontscheibe 27 angeordnete Kamera 25 auf, mittels der ein Bild von der linken Behelfsfahrspur 4 vor dem Kraftfahrzeug 1 aufnehmbar ist.

In vorteilhafter Ausgestaltung ist vorgesehen, dass Ausgangsignale der Radarsensoren 53 und 59 zusammen mit weiteren - im vorliegenden Ausführungsbeispiel als Ultraschallsensoren ausgebildeten - Sensoren 54, 55, 56, 57 und 58 in einem Einparkhilfesystem Verwendung finden. Die Radarsensoren 50, 51, 53, 59, 60 und 61 besitzen eine Grundfrequenz von in etwa 24 GHz und sind zur Messung eines Abstandes von weniger als 5 m zwischen dem Kraftfahrzeug 1 und einem neben der Fahrbahn liegenden Hindernis ausgebildet. An Stelle der Radarsensoren 50, 51, 53, 59, 60 und 61 können auch Lasersensor verwendet werden.

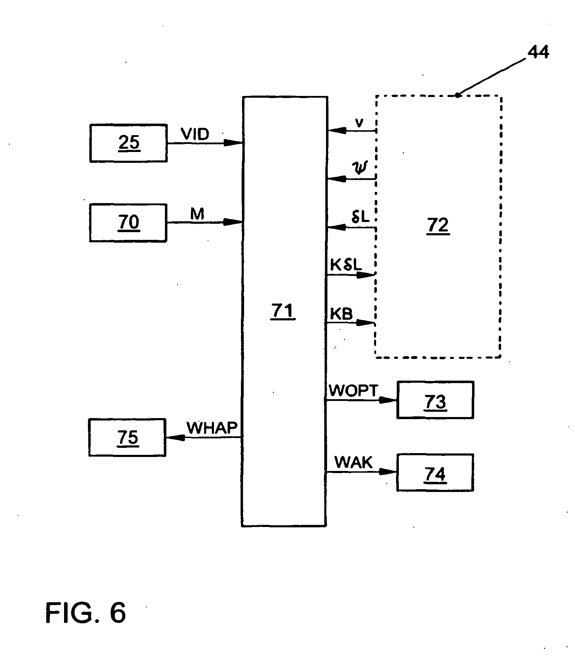

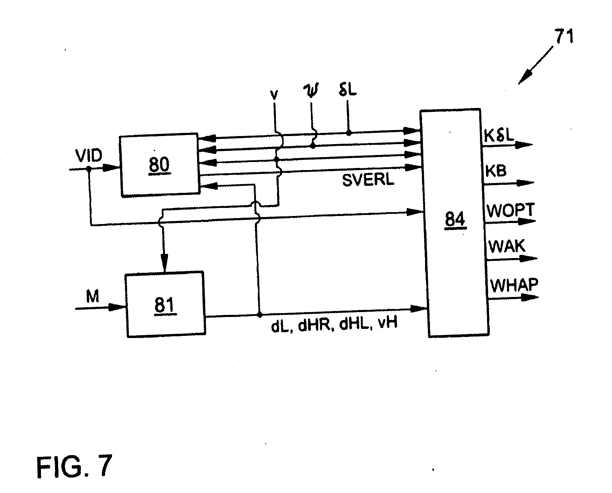

Das Kraftfahrzeug 1 weist ein Fahrassistenzsystem auf, das unter Bezugnahme auf Fig. 6 und Fig. 7 erläutert ist. Das Fahrassistenzsystem umfasst eine Fahrassistenzsteuerung 71, die Kamera 25 und die Radarsensoren 50, 51, 53, 59, 60 und 61 (bzw. Lasersensor), die in Fig. 6 stellvertretend durch einen Radarsensor 70 dargestellt sind. Die Kamera 25 liefert der Fahrassistenzsteuerung 71 ein Videosignal VID mit einem Bild von der linken Behelfsfahrspur 4 vor dem Kraftfahrzeug 1. Der Radarsensor 70 liefert der Fahrassistenzsteuerung 71 ein Signal M.

Die Fahrassistenzsteuerung 71 weist eine Schnittstelle auf, mittels derer die aktuelle Geschwindigkeit v des Kraftfahrzeuges 1, der Lenkwinkel öL des Kraftfahrzeuges 1 und/oder die Gierrate ψ des Kraftfahrzeuges 1 eingelesen werden können. Diese Werte kann die Fahrassistenzsteuerung 71 z.B. von einer Fahrstabilitätsregelung 72 erhalten. Einzelheiten zu dem Lenkwinkel δL des Kraftfahrzeuges 1, der Gierrate ψ des Kraftfahrzeuges 1 sowie zu einer Fahrstabilitätsregelung 72 können z.B. dem Buch Bosch, Kraftfahrtechnisches Taschenbuch, 23. Auflage, Vieweg, 1999, ISBN 3-528-03876-4, insbesondere Seite 355, entnommen werden.

Die Fahrassistenzsteuerung 71 erzeugt in vorteilhafter Ausgestaltung einen Lenkwinkelkorrekturwert KöL und/oder einen Bremskorrekturwert KB in Abhängigkeit des Signals M und optional des Signals VID. Der Lenkwinkelkorrekturwert KöL und/oder der Bremskorrekturwert KB können z.B. der Fahrstabilitätsregelung 72 zugeleitet werden.

Die Fahrassistenzsteuerung 71 erzeugt in vorteilhafter Ausgestaltung eine optische Abstandswarninformation WOPT, eine akustische Abstandswarninformation WAK und/oder eine haptische Abstandswarninformation WHAP in Abhängigkeit des Signals M und optional des Signals VID.

Eine Warnung an einen Fahrer mittels der optischen Abstandswarninformation WOPT, der akustischen Abstandswarninformation WAK und/oder der haptischen Abstandswarninformation WHAP kann in einer oder mehreren Stufen erfolgen. Bei einstufiger Warnung wird dem Fahrer signalisiert "Lücke zu eng, nicht passieren". Bei mehrstufiger Warnung kann z.B. zwischen der Information "Lücke zu eng" und "Lücke groß genug" noch die Information "Lücke nur von geübtem Fahrer zu passieren" eingefügt werden. Weitere Zwischenstufen sind möglich. Als Lücke ist der Abstand dL oder der Abstand zwischen dem Lastkraftwagen 2 und der Fahrbahnmarkierung 6 zu verstehen.

Die optische Warnung kann durch bereits im Fahrzeug zur Verfügung stehende Anzeigeelemente z.B. durch ein so genanntes Kombiinstrument 73 erfolgen. Im Kombiinstrument 73 können z.B. Textmeldungen oder Piktogramme oder geeignet visualisierte Abstandsinformationen eingespielt werden. Ein LED-Balken einer Park Distanz Kontrolle (Einparkhilfesystem) kann im Fahrbetrieb den Abstand zu seitlich benachbarten Fahrzeugen anzeigen. Je mehr Balken aufleuchten, desto geringer ist der Abstand. Leuchten rote LED-Balken auf, dann ist ein kritischer Mindestabstand unterschritten. Wird eine separate Warnleuchte für das Fahrassistenzsystem verwendet, so ist diese vorteilhafterweise so im Cockpit angeordnet, dass sie vom Fahrer bei jeder Fahrsituation gut wahrgenommen werden kann.

Akustische Warnungen können an den Fahrer mittels eines Lautsprechers 74 über Sprachmeldungen, Melodien oder einzelne Warntöne ausgegeben werden. Sprachmeldungen sind dann gut einsetzbar, wenn der Fahrer noch ausreichend Reaktionszeit hat, er sich also z.B. einer voraus liegenden Lücke langsam nähert.

Haptische Warnungen können an den Fahrer über mittels eines in einem Lenkrad, einem Fahrersitz oder einer Rückenlehne angeordneten Aktors 75 erzeugte Vibrationen ausgegeben werden. Es kann auch vorsehen werden, dass haptische Warnungen in Form von Vibrationen im Lenkrad oder einen Ruck im Lenkrad durch den Lenkwinkelkorrekturwert KöL ausgelöst werden.

Es kann alternativ oder zusätzlich zu Warnhinweisen ein Eingriff in die Querführung des Kraftfahrzeuges 1 durch einen aktiven Lenkeingriff oder ein Gegenmoment auf dem Lenkrad erfolgen.

Beim aktiven Lenkeingriff hält das Kraftfahrzeug 1 selbständig einen ausreichenden Abstand dHL oder dHR zu einem Hindernis wie der Mauer 8 (oder der Fahrbahnmarkierung 6) oder dem Lastkraftwagen 2 auf der rechten Behelfsfahrspur 3 durch eigenständiges Lenken in Abhängigkeit des Lenkwinkelkorrekturwertes KδL ein. In Gefahrensituationen (Lücke voraus ist zu eng) wird gebremst, entweder vom Fahrer, welcher hierzu durch einen Warnhinweis aufgefordert wird, oder automatisch in Abhängigkeit des Bremskorrekturwertes KB.

Alternativ zum aktiven Lenkeingriff kann ein Gegenmoment erzeugt werden. Ist der Abstand dHL oder dHR zu einem Hindernis wie der Mauer 8 oder dem Lastkraftwagen 2 auf der rechten Behelfsfahrspur 3 zu klein oder wird beim Durchfahren einer voraus liegenden Lücke (also dL) zu klein sein, wird in Abhängigkeit des Lenkwinkelkorrekturwertes KδL ein leichtes Gegenmoment auf das Lenkrad ausgegeben. Dieses Gegenmoment wird vom Fahrer wahrgenommen und die Fahrtrichtung korrigiert.

Es kann alternativ oder zusätzlich zu Warnhinweisen mittels des Bremskorrekturwertes KB ein Eingriff in die Längsführung des Kraftfahrzeuges 1 durch starkes Bremsen, schwaches Bremsen und/oder, kurzes, ruckartiges Antippen der Bremse erfolgen. Dabei kann bei hoher Kritikalität, also wenn eine Kollision mit einem Hindernis wie der Mauer 8 oder dem Lastkraftwagen 2 auf der rechten Behelfsfahrspur 3 unmittelbar bevorsteht, ggf. durch Bremsen (eingeleitet durch den Bremskorrekturwert KB) diese Kollision vermieden werden. Ist z. B. eine Lücke also der Abstand dL zwischen der Mauer 8 und dem Lastkraftwagen 2 auf der rechten Behelfsfahrspur 3 zu eng, dann wird in beispielhafter Ausgestaltung durch leichtes Bremsen die Geschwindigkeit v des Kraftfahrzeuges 1 an die Geschwindigkeit vH des Lastkraftwagens 2 angepasst.

Ist die Lücke (also der Abstand dL) zwischen der Mauer 8 (oder der Fahrbahnmarkierung 6) und dem Lastkraftwagen 2 auf der rechten Behelfsfahrspur 3 zu eng und die Geschwindigkeit v des Kraftfahrzeuges 1 zu hoch, dann kann der Fahrer durch kurzes, ruckartiges Antippen der Bremse auf die Gefahrensituation voraus aufmerksam gemacht werden Dies gilt insbesondere dann, wenn das Kraftfahrzeug 1 Lastkraftwagen 2 nicht erreicht hat.

Fig. 7 zeigt die Fahrassistenzsteuerung 71 in detaillierter Darstellung. Die Fahrassistenzsteuerung 71 weist eine Auswerteinheit 81 auf, mittels der aus dem Signal M und ggf. durch Verknüpfung der Signale mehrerer Sensoren der Abstand dHR zwischen dem Kraftfahrzeug 1 und dem Lastkraftwagen 2, der Abstand dHL zwischen dem Kraftfahrzeug 1 und der Mauer 8, der Abstand dL zwischen dem Lastkraftwagen 2 und der Mauer 8 (oder der Fahrbahnmarkierung 6) und/oder die Geschwindigkeit vH des Lastkraftwagens 2 ermittelt wird.

Der Abstand dHR zwischen dem Kraftfahrzeug 1 und dem Lastkraftwagen 2, der Abstand dHL zwischen dem Kraftfahrzeug 1 und der Mauer 8 (oder der Fahrbahnmarkierung 6), der Abstand dL zwischen dem Lastkraftwagen 2 und der Mauer 8 (oder der Fahrbahnmarkierung 6) und/oder die Geschwindigkeit vH des Lastkraftwagens 2 sind zusammen mit dem Signal VID, der Geschwindigkeit v des Kraftfahrzeuges 1, dem Lenkwinkel δL des Kraftfahrzeuges 1 und der Gierrate ψ des Kraftfahrzeuges 1 Eingangsgrößen in ein Straßenverlaufsmodell 80 zur Ermittlung des Straßenverlaufs SVERL mittels Extrapolation.

Der Straßenverlauf SVERL ist zusammen mit dem Signal VID und einem oder mehreren der Größen bzw. Signale
- Abstand dHR zwischen dem Kraftfahrzeug 1 und dem Lastkraftwagen 2,
- Abstand dHL zwischen dem Kraftfahrzeug 1 und der Mauer 8,
- Abstand dL zwischen dem Lastkraftwagen 2 und der Mauer 8,
- Geschwindigkeit vH des Lastkraftwagens 2,
- Videosignal VID,
- Geschwindigkeit v des Kraftfahrzeuges 1,
- Lenkwinkel δL des Kraftfahrzeuges 1 und
- Gierrate ψ des Kraftfahrzeuges 1

Eingangsgröße in eine Ausgangsstufe 84 zur Erzeugung und Ausgabe der der Ausgangsgrößen der Fahrassistenzsteuerung 71.

Die Auswerteeinheit muss nicht Bestandteil der Fahrassistenzsteuerung 71 sein. Sie kann auch Bestandteil einer Sensordatenverarbeitung sein.

### BEZUGSZEICHENLISTE

- 1: Kraftfahrzeug
- 2: Lastkraftwagen
- 3, 4: Behelfsfahrspur
- 5,6: Fahrbahnmarkierung
- 8: Mauer
- 20, 22: Seitenspiegel
- 23, 24: Stoßfänger
- 25: Kamera
- 27: Frontscheibe
- 30, 31, 32, 33: Keule
- 35, 36: Doppelpfeil
- 50, 51, 53, 59, 60, 61, 70: Radarsensor
- 54, 55, 56, 57, 58: Sensoren
- 71: Fahrassistenzsteuerung
- 72: Fahrstabilitätsregelung
- 73: Kombiinstrument
- 74: Lautsprecher
- 75: Aktor
- 80: Straßenverlaufsmodell
- 81: Auswerteinheit
- 84: Ausgangsstufe

- dHL, dHR, dL: Abstand
- KB: Bremskorrekturwert
- KδL: Lenkwinkelkorrekturwert
- M: Signal
- SVERL: Straßenverlauf
- VID: Videosignal
- v, vH: Geschwindigkeit
- WAK: akustische Abstandswarninformation
- WHAP: haptische Abstandswarninformation
- WOPT: optische Abstandswarninformation
- δL: Lenkwinkel
- ψ: Gierrate

## Patentansprüche

1. Fahrassistenzsystem für ein auf einer Fahrspur (4) fahrbares Kraftfahrzeug (1), wobei das Fahrassistenzsystem einen Radarsensor (50,51,53,59,60,61,70) oder einen Lasersensor
- zur Bestimmung eines Abstandes (dHL, dHR) zwischen dem Kraftfahrzeug (1) und einem im wesentlichen neben der Fahrspur (4) liegenden Hindernis (2,8),
- zur Bestimmund eines Abstandes (dL) zwischen zumindest zwei Hindernissen (2,8) vor dem Kraftfahrzeug (1) und
- zur Bestimmung einer Geschwindigkeit (vH) des Hindernisses (2,8)
sowie eine Fahrassistenzsteuerung (71)
- zur Bestimmung eines Lenkwinkelkorrekturwertes,
- zur Bestimmung eines Bremskorrekturwertes und
- zur Ausgabe einer Abstandswarninformation
in Abhängigkeit
- des Abstandes (dL) zwischen den zumindest zwei Hindernissen (2,8) vor dem Kraftfahrzeug (1),
- des Abstandes (dHL, dHR) zwischen dem Kraftfahrzeug (1) und dem im wesentlichen neben der Fahrspur (4) liegenden Hindernis (2,8) und
- der Geschwindigkeit (vH) des Hindernisses (2,8)
aufweist.

2. Fahrassistenzsystem nach Anspruch 1 oder 2, **dadurch gekennzeichnet, dass** das Fahrassistenzsystem einen Radarsensor (50, 51, 53, 59, 60, 61, 70) zur Bestimmung
- des Abstandes (dHL, dHR) zwischen dem Kraftfahrzeug (1) und dem im wesentlichen neben der Fahrspur (4) liegenden Hindernis (2,8),
- des Abstandes (dL) zwischen den zumindest zwei Hindernissen (2, 8) vor dem Kraftfahrzeug (1) oder
- der Geschwindigkeit (vH) des Hindernisses (2)
und einen Lasersensor zur Bestimmung
- des Abstandes (dHL, dHR) zwischen dem Kraftfahrzeug (1) und dem im wesentlichen neben der Fahrspur (4) liegenden Hindernis (2, 8),
- des Abstandes (dL) zwischen den zumindest zwei Hindernissen (2, 8) vor dem Kraftfahrzeug (1) oder
- der Geschwindigkeit (vH) des Hindernisses (2)
aufweist.

3. Fahrassistenzsystem nach Anspruch 1, oder 2, **dadurch gekennzeichnet, dass** der Radarsensor, der Lasersensor oder der Radarsensor (50, 51, 53, 59, 60, 61, 70) und der Lasersensor zur Bestimmung eines Abstandes von weniger als 10 m zwischen dem Kraftfahrzeug (1) und einem im wesentlichen neben der Fahrspur (4) oder vor dem Kraftfahrzeug (1) liegenden Hindernis ausgebildet sind.

4. Fahrassistenzsystem nach Anspruch 3, **dadurch gekennzeichnet, dass** der Radarsensor, der Lasersensor oder der Radarsensor (50, 51, 53, 59, 60, 61, 70) und der Lasersensor zur Bestimmung eines Abstandes von weniger als 5 m zwischen dem Kraftfahrzeug (1) und einem im wesentlichen neben der Fahrspur (4) oder vor dem Kraftfahrzeug (1) liegenden Hindernis ausgebildet sind.

5. Fahrassistenzsystem nach Anspruch 4, **dadurch gekennzeichnet, dass** der Radarsensor, der Lasersensor oder der Radarsensor (50, 51, 53, 59, 60, 61', 70) und der Lasersensor zur Bestimmung eines Abstandes von weniger als 1 m zwischen dem Kraftfahrzeug (1) und einem im wesentlichen neben der Fahrspur (4) oder vor dem Kraftfahrzeug (1) liegenden Hindernis ausgebildet sind.

6. Fahrassistenzsystem nach einem der vorhergehenden Ansprüche, **dadurch gekennzeichnet, dass** der Radarsensor (50, 51, 53, 59, 60, 61, 70) eine Grundfrequenz von in etwa 24 GHz besitzt.

7. Fahrassistenzsystem nach einem der vorhergehenden Ansprüche, **dadurch gekennzeichnet, dass** es eine Kamera (25) zum Aufnehmen eines Bildes der Fahrspur (4) aufweist.

8. Fahrassistenzsystem nach Anspruch 7, **dadurch gekennzeichnet, dass** die Fahrassistenzsteuerung (71) zur Bestimmung des Lenkwinkelkorrekturwertes oder der Abstandswarninformation in Abhängigkeit des von der Kamera (25) aufgenommenen Bildes der Fahrspur (4) ausgebildet ist.

9. Fahrassistenzsystem nach Anspruch 7 oder 8, **dadurch gekennzeichnet, dass** mittels der Kamera (25) ein Videosignal (VID) ausgebbar ist.

10. Fahrassistenzsystem nach einem der vorhergehenden Ansprüche, **dadurch gekennzeichnet, dass** es eine Einrichtung zur automatischen Einstellung der Lenkung in Abhängigkeit des Lenkwinkelkorrekturwertes aufweist.

11. Fahrassistenzsystem nach einem der vorhergehenden Ansprüche, **dadurch gekennzeichnet, dass** es eine Einrichtung zur optischen Darstellung und/oder akustischen Wedergabe der Abstandswarninformation aufweist.

12. Kraftfahrzeug (1), **dadurch gekennzeichnet, dass** es ein Fahrassistenzsystem nach einem der vorhergehenden Ansprüche aufweist.

13. Kraftfahrzeug (1) nach Anspruch 12, **dadurch gekennzeichnet, dass** ein Radarsensor, ein Lasersensor oder ein Radarsensor (50, 51, 53, 59, 60, 61, 70) und ein Laserscanner an einem Seitenspiegel (20, 22) des Kraftfahrzeuges (1) angeordnet ist.

14. Kraftfahrzeug (1) nach Anspruch 12 oder 13, **dadurch gekennzeichnet, dass** ein Radarsensor, ein Lasersensor oder ein Radarsensor (50, 51, 53, 59, 60, 61, 70) und ein Laserscanner an einem und/oder in einem Stoßfänger (23, 24) oder einem seitlichen Bereich des Kraftfahrzeuges (1) angeordnet ist.

## Claims

1. Driver assistance system for a motor vehicle (1) which can travel on a lane (4), wherein the driver assistance system has a radar sensor (50, 51, 53, 59, 60, 61, 70) or a laser sensor
- for determining a distance (dHL, dHR) between the motor vehicle (1) and an obstacle (2, 8) located essentially next to the lane (4),
- for determining a distance (dL) between at least two obstacles (2, 8) in front of the motor vehicle (1) and
- for determining a speed (vH) of an obstacle (2, 8),
and a driver assistance controller (71)
- for determining a steering angle correction value,
- for determining a braking correction value and
- for outputting distance warning information as a function
- of the distance (dL) between the at least two obstacles (2, 8) in front of the motor vehicle (1)
- of the distance (dHL, dHR) between the motor vehicle (1) and the obstacle (2, 8) which is located essentially next to the lane (4) and
- of the speed (vH) of the obstacle (2, 8).

2. Driver assistance system according to Claim 1, **characterized in that** the driver assistance system has a radar sensor (50, 51, 53, 59, 60, 61, 70) for determining
- the distance (dHL, dHR) between the motor vehicle (1) and the obstacle (2, 8) located essentially next to the lane (4),
- the distance (dL) between the at least two obstacles (2, 8) in front of the motor vehicle (1) or
- the speed (vH) of the obstacle (2) and a laser sensor for determining
- the distance (dHL, dHR) between the motor vehicle (1) and the obstacle (2, 8) located essentially next to the lane (4),
- the distance (dL) between the at least two obstacles (2, 8) in front of the motor vehicle (1) or
- the speed (vH) of the obstacle (2).

3. Driver assistance system according to Claim 1 or 2, **characterized in, that** the radar sensor, the laser sensor or the radar sensor (50, 51, 53, 59, 60, 61, 70) and the laser sensor are designed to determine a distance of less than 10 m between the motor vehicle (1) and an obstacle located essentially next to the lane (4) or in front of the motor vehicle (1).

4. Driver assistance system according to Claim 3, **characterized in that** the radar sensor, the laser sensor or the radar sensor (50, 51, 53, 59, 60, 61, 70) and the laser sensor are designed to determine a distance of less than 5 m between the motor vehicle (1) and an obstacle located essentially next to the lane (4) or in front of the motor vehicle (1).

5. Driver assistance system according to Claim 4, **characterized in that** the radar sensor, the laser sensor or the radar sensor (50, 51, 53, 59, 60, 61, 70) and the laser sensor are designed to determine a distance of less than 1 m between the motor vehicle (1) and an obstacle located essentially next to the lane (4) or in front of the motor vehicle (1).

6. Driver assistance system according to one of the preceding claims, **characterized in that** the radar sensor (50, 51, 53, 59, 60, 61, 70) has a basic frequency of approximately 24 GHz.

7. Driver assistance system according to one of the preceding claims, **characterized in that** it has a camera (25) for recording an image of the lane (4).

8. Driver assistance system according to Claim 7, **characterized in that** the driver assistance controller (71) is designed to determine the steering angle correction value or the distance warning information as a function of the image of the lane (4) which is recorded by the camera (25).

9. Driver assistance system according to Claim 7 or 8, **characterized in that** a video signal (VID) can be output by means of the camera (25).

10. Driver assistance system according to one of the preceding claims, **characterized in that** it has a device for automatically setting the steering as a function of the steering angle correction value.

11. Driver assistance system according to one of the preceding claims, **characterized in that** it has a device for visually displaying and/or acoustically reproducing the distance warning information.

12. Motor vehicle (1), **characterized in that** it has a driver assistance system according to one of the preceding claims.

13. Motor vehicle (1) according to Claim 12, **characterized in that** a radar sensor, a laser sensor or a radar sensor (50, 51, 53, 59, 60, 61, 70) and a laser scanner are arranged on a side mirror (20, 22) of the motor vehicle (1).

14. Motor vehicle (1) according to Claim 12 or 13, **characterized in that** a radar sensor, a laser sensor or a radar sensor (50, 51, 53, 59, 60, 61, 70) and a laser scanner are arranged on and/or in a bumper (23, 24) or a lateral area of the motor vehicle (1).

## Revendications

1. Système d'assistance à la conduite pour un véhicule (1) pouvant circuler sur une voie de circulation (4), le système d'assistance à la conduite présentant un capteur radar (50, 51, 53, 59, 60, 61, 70) ou un capteur laser
- pour déterminer une distance (dHL, dHR) entre le véhicule (1) et un obstacle (2, 8) situé essentiellement à côté de la voie de circulation (4),
- pour déterminer une distance (dL) entre au moins deux obstacles (2, 8) devant le véhicule (1) et
- pour déterminer une vitesse (vH) d'un obstacle (2, 8),
ainsi qu'une unité (71) de commande d'assistance à la conduite
- pour déterminer une valeur correctrice d'angle de direction,
- pour déterminer une valeur correctrice de freinage et
- pour délivrer un avertissement de distance en fonction
- de la distance (dL) entre les au moins deux obstacles (2, 8) devant le véhicule (1),
- de la distance (dHL, dHR) entre le véhicule (1) et l'obstacle (2, 8) situé essentiellement à côté de la voie de circulation (4) et
- de la vitesse (vH) de l'obstacle (2, 8).

2. Système d'assistance à la conduite selon la revendication 1, **caractérisé en ce que** le système d'assistance à la conduite présente un capteur radar (50, 51, 53, 59, 60, 61, 70) pour déterminer
- la distance (dHL, dHR) entre le véhicule (1) et l'obstacle (2, 8) situé essentiellement à côté de la voie de circulation (4),
- la distance (dL) entre les au moins deux obstacles (2, 8) devant le véhicule (1) ou
- la vitesse (vH) de l'obstacle (2),
et un capteur laser pour déterminer
- la distance (dHL, dHR) entre le véhicule (1) et l'obstacle (2, 8) situé essentiellement à côté de la voie de circulation (4),
- la distance (dL) entre les au moins deux obstacles (2, 8) devant le véhicule (1) ou
- la vitesse (vH) de l'obstacle (2).

3. Système d'assistance à la conduite selon la revendication 1 ou 2, **caractérisé en ce que** le capteur radar, le capteur laser ou le capteur radar (50, 51, 53, 59, 60, 61, 70) et le capteur laser sont conçus pour déterminer une distance inférieure à 10 m entre le véhicule (1) et un obstacle situé essentiellement à côté de la voie de circulation (4) ou devant le véhicule (1).

4. Système d'assistance à la conduite selon la revendication 3, **caractérisé en ce que** le capteur radar, le capteur laser ou le capteur radar (50, 51, 53, 59, 60, 61, 70) et le capteur laser sont conçus pour déterminer une distance inférieure à 5 m entre le véhicule (1) et un obstacle situé essentiellement à côté de la voie de circulation (4) ou devant le véhicule (1).

5. Système d'assistance à la conduite selon la revendication 4, **caractérisé en ce que** le capteur radar, le capteur laser ou le capteur radar (50, 51, 53, 59, 60, 61, 70) et le capteur laser sont conçus pour déterminer une distance inférieure à 1 m entre le véhicule (1) et un obstacle situé essentiellement à côté de la voie de circulation (4) ou devant le véhicule (1).

6. Système d'assistance à la conduite selon l'une des revendications précédentes, **caractérisé en ce que** le capteur radar (50, 51, 53, 59, 60, 61, 70) possède une fréquence de base d'environ 24 GHz.

7. Système d'assistance à la conduite selon l'une des revendications précédentes, **caractérisé en ce qu'**il présente une caméra (25) pour enregistrer une image de la voie de circulation (4).

8. Système d'assistance à la conduite selon la revendication 7, **caractérisé en ce que** l'unité (71) de commande d'assistance à la conduite est conçue pour déterminer la valeur correctrice d'angle de direction ou l'avertissement de distance en fonction de l'image de la voie de circulation (4) enregistrée par la caméra (25).

9. Système d'assistance à la conduite selon la revendication 7 ou 8, **caractérisé en ce qu'**un signal vidéo (VID) peut être délivré au moyen de la caméra (25).

10. Système d'assistance à la conduite selon l'une des revendications précédentes, **caractérisé en ce qu'**il présente un dispositif pour régler automatiquement la direction en fonction de la valeur correctrice d'angle de direction.

11. Système d'assistance à la conduite selon l'une des revendications précédentes, **caractérisé en ce qu'**il présente un équipement pour représenter optiquement ou pour restituer acoustiquement l'avertissement de distance.

12. Véhicule (1), **caractérisé en ce qu'**il présente un système d'assistance à la conduite selon l'une des revendications précédentes.

13. Véhicule (1) selon la revendication 12, **caractérisé en ce qu'**un capteur radar, un capteur laser ou un capteur radar (50, 51, 53, 59, 60, 61, 70) et un scanner laser sont disposés sur un rétroviseur latéral (20, 22) du véhicule (1).

14. Véhicule (1) selon la revendication 12 ou 13, **caractérisé en ce que** qu'un capteur radar, un capteur laser ou un capteur radar (50, 51, 53, 59, 60, 61, 70) et un scanner laser sont disposés sur et/ou dans un pare-chocs (23, 24) ou une région latérale du véhicule (1).
